# EUROPÄISCHE PATENTSCHRIFT

(11) **EP 0 839 402 B1**
(45) Veröffentlichungstag und Bekanntmachung des Hinweises auf die Patenterteilung: **21.04.1999**
(21) Anmeldenummer: 96923821.1
(22) Anmeldetag: 09.07.1996
(51) Int. Cl.: H02K 3/40

(54) **WICKLUNGSELEMENT FÜR EINE ELEKTRISCHE MASCHINE**
WINDING ELEMENT FOR AN ELECTRICAL MACHINE
ELEMENT D'ENROULEMENT POUR MACHINE ELECTRIQUE

(30) Priorität: 18.07.1995 DE 19526198
(43) Veröffentlichungstag der Anmeldung: 06.05.1998
(73) Patentinhaber: SIEMENS AKTIENGESELLSCHAFT, 80333 München (DE)
(72) Erfinder: BENDFELD, Udo, D-46047 Oberhausen (DE)
(86) Internationale Anmeldenummer: DE9601239
(87) Internationale Veröffentlichungsnummer: WO9704515

(56) Entgegenhaltungen:
- WO-A-91/01059
- WO-A-93/06646
- PATENT ABSTRACTS OF JAPAN Bd. 011, Nr. 343 (E-555) 10 November 1987 & JP,A,62 123 936 (HITACHI LTD) 05 Juni 1987
- PATENT ABSTRACTS OF JAPAN Bd. 006, Nr. 140 (E-121) 29 Juli 1982 & JP,A,57 065 239 (HITACHI LTD) 20 April 1982

## Beschreibung

Die Erfindung betrifft ein Wicklungselement für eine elektrische Maschine, mit einer elektrisch leitfähigen Leiteranordnung zur Leitung eines elektrischen Stromes und einer Isolierschicht, welche die Leiteranordnung umgibt, sowie einer die Isolierschicht umgebenden Schutzanordnung mit einer Trennschicht. Die Erfindung betrifft auch einen Satz mit mehreren solcher Wicklungselemente.

Ein Wicklungselement der genannten Art sowie Hinweise zur Kombination eines solchen Wicklungselementes mit gleichartigen Wicklungselementen zu einem Satz, wobei die Wicklungselemente untereinander verschaltet sind und eine Wicklung für eine elektrische Maschine, nämlich einen Turbogenerator, bilden, gehen hervor aus der WO 91/01059 A1 sowie der WO 93/06646 A1. Die Schutzanordnung dient bei einem solchen Wicklungselement zum Ausgleich mechanischer Dehnungen, die sich ergeben, wenn das Wicklungselement wechselnden Temperaturen unterworfen wird. Die Schutzanordnung bildet in der Trennschicht eine elektrisch abgeschirmte Zone, die die Leiteranordnung sowie die Isolierschicht umgibt und die eine Festigkeit hat, die gegenüber einer Festigkeit der Isolierschicht und einer Festigkeit der Leiteranordnung deutlich verringert ist. Wenn sich also Dehnungen ergeben, so können diese Dehnungen kompensiert werden durch Spalte, die sich in der Trennschicht bilden. Jeder dieser Spalte ist, wie gesagt, elektrisch abgeschirmt; aus diesem Grunde kann sich in dem Spalt keine Glimmentladung bilden, die das Wicklungselement beschädigen könnte. Die elektrische Abschirmung der Trennschicht ist gebildet mit elektrisch leitfähigen Textilien, insbesondere Geweben oder Vliesen, die die Trennschicht, welche als wirksame Bestandteile Spaltglimmerblätter enthält, zwischen sich einschließen. Die elektrisch leitfähigen Textilien können Textilien aus elektrisch leitfähigen Fasern, insbesondere bestimmten Kunststoffasern sein, sie können auch aus elektrisch isolierenden Fasern, beispielsweise Glasfasern, bestehen und durch die Hinzufügung weiterer Komponenten, beispielsweise elektrisch leitfähiger Beschichtungen und/oder Ruß, nachträglich elektrisch leitfähig gemacht worden sein. Um die elektrische Abschirmung der Trennschicht zu gewährleisten, sind die diese einschließenden elektrisch leitfähigen Kontaktschichten über Brücken, die durch die Trennschicht hindurch verlaufen, miteinander elektrisch kontaktiert. Diese Brücken sind gebildet mit einem weiteren, elektrisch zumindest schwach leitfähigen Textilband. Die Trennschicht selbst wird bereitgestellt als Band, welches Spaltglimmerblätter enthält. Diese Spaltglimmerblätter neigen zu weiterer Aufspaltung, und diese Neigung ist es, auf welcher die verringerte Festigkeit der Trennschicht und die Spaltbildung bei einem mechanischen Dehnungsprozeß beruht. Dieses Band wird auf das Wicklungselement gewickelt, und ein anderes, elektrisch leitfähiges Band, welches die Brücken bildet, wird abwechselnd über das Glimmerband oder unter das Glimmerband geführt, wobei es die notwendigen Brücken bildet. Diese Brücken sind diejenigen Abschnitte des Bandes, die zwischen zwei nebeneinander liegenden Lagen des Spaltglimmerblätter enthaltenden Bandes zu liegen kommen und somit von einer der Isolierschicht zugewandten Innenseite zu einer der Isolierschicht abgewandten Außenseite des Spaltglimmer enthaltenden Bandes reichen. Die Kontaktschichten können separat von der Trennschicht oder zusammen mit der Trennschicht aufgebracht werden; insbesondere kann eine der Kontaktschichten ein textiles Trägermaterial für die Spaltglimmerblätter sein.

Ein wichtiger Bestandteil der isolierenden Komponenten eines Wicklungselementes für eine elektrische Maschine ist eine Harzzubereitung, in die weitere Bestandteile der isolierenden Komponenten, insbesondere Glimmerzubereitungen, eingelagert sind. Gemäß üblicher Praxis sind die Glimmerzubereitungen enthalten in Bändern, die auf die Leiteranordnung des Wicklungselementes aufgewickelt werden und anschließend eine Imprägnierung mit der Harzzubereitung erhalten. Die Harzzubereitung ist zunächst viskos-flüssig und wird, nachdem sie in die isolierenden Komponenten eingebracht ist, durch Einleitung eines bestimmten chemischen Prozesses ausgehärtet. Üblich ist die Verwendung einer Harzzubereitung in Form eines Gemisches aus einem Epoxidharz und einem Anhydrid einer organischen Säure. Diese Harzzubereitung wird durch Einleitung einer spezifischen chemischen Reaktion, die zu einer chemischen Bindung des Anhydrids an das Epoxidharz führt, ausgehärtet und wird dabei zu einem festen Körper. Die Imprägnierung und Aushärtung kann erfolgen für jedes Wicklungselement gesondert; es ist auch möglich, und für eine elektrische Maschine in einer Größe, wie sie für elektrische Maschinen mit Leistungsabgaben oder -aufnahmen bis 300 MW üblich ist, auch vorteilhaft, alle Wicklungselemente ohne vorherige Imprägnierung zunächst zu der fertigen Wicklung zu verschalten und anschließend die Wicklung zusammen mit einem Wicklungsträger, auf dem sie installiert ist, mit der Harzzubereitung zu imprägnieren und die Harzzubereitung auszuhärten. Dieses Verfahren ist als "Ganztränkverfahren" bekannt.

Bandförmige Materialien, die elektrisch mehr oder weniger leitfähig sowie für Glimmschutzanordnungen an Wicklungselementen verwendbar sind, gehen hervor aus der DE-AS 1 021 062, der DE-AS 11 18 290 und der CH-PS 521 661. In keiner dieser Schriften wird jedoch hingewiesen auf die Verwendung solchen bandförmigen Materials in Zusammenhang mit einer Trennschicht, wie vorliegend erläutert.

Ein Nachteil an den aus der WO 91/01059 A1 und der WO 93/06646 A1 bekannten Wicklungselementen kann sich daraus ergeben, daß das Aufbringen der Trennschicht mit den erforderlichen elektrisch leitfähigen Brücken relativ kompliziert ist und demzufolge in der Regel in Handarbeit ausgeführt werden muß. Im Sinne einer Vereinfachung und Verbilligung des notwendigen Fertigungsprozesses ist es somit die der Erfindung zugrundeliegende Aufgabe, ein Wicklungselement der eingangs genannten Art anzugeben, welches eine Schutzanordnung aufweist, die mit geringem Aufwand und maschinell aufgebracht werden kann. Es soll auch ein entsprechender Satz mit mehreren Wicklungselementen angegeben werden.

Zur Lösung dieser Aufgabe angegeben wird ein Wicklungselement für eine elektrische Maschine, mit einer elektrisch leitfähigen Leiteranordnung zur Leitung eines elektrischen Stromes und einer Isolierschicht, welche die Leiteranordnung umgibt, sowie einer die Isolierschicht umgebenden Schutzanordnung, welche Schutzanordnung eine schraubenartig angeordnete Trennschicht aufweist, dadurch gekennzeichnet, daß die Schutzanordnung eine schraubenartig und selbstüberlappend angeordnete sowie die Trennschicht von einer der Isolierschicht zugewandten Innenseite zu einer der Isolierschicht abgewandten Außenseite durchquerende, elektrisch zumindest schwach leitfähige Kontaktschicht aufweist.

Dieses Wicklungselement zeichnet sich dadurch aus, daß die aufwendig herzustellenden Brücken nicht mehr erforderlich sind. Es wird Abstand genommen von der geläufigen Praxis, für die Schutzanordnung einen durchgehenden dreischichtigen Aufbau vorzusehen. Demgegenüber wird nunmehr ein im wesentlichen zweischichtiger Aufbau der Schutzanordnung gelehrt, wobei die noch erforderlichen zwei Schichten, nämlich die Trennschicht und die Kontaktschicht, schraubenartig um das Wicklungselement herumgeführt sind. Durch diese schraubenartige Anordnung kann von den aufwendig herzustellenden Brücken abgesehen werden, da die Kontaktschicht durch ihre Selbstüberlappung selbst vielfältig von einer Innenseite der Trennschicht zu einer Außenseite der Trennschicht führt und damit den zur elektrischen Abschirmung der Trennschicht notwendigen Potentialausgleich bewerkstelligen kann. Zudem ist eine Überbrükkung an der Außenseite des Wicklungselementes in Umfangsrichtung durch einen Wicklungsträger erreichbar. Dieser umgibt das Wicklungselement in Umfangsrichtung und ist mit diesem kontaktiert. Hierdurch kann ein Außenglimmschutzstrom in überwiegend axialer und nicht schraubenförmiger Richtung fließen. Es ist selbstverständlich möglich und im Rahmen gewisser Weiterbildungen auch vorteilhaft, zur Realisierung der Schutzanordnung im Sinne der Erfindung ein dreischichtiges Band, bestehend aus zwei elektrisch leitfähigen Lagen, die eine Lage aus Spaltglimmerblättern zwischen sich einschließen, zu verwenden; Einzelheiten hierzu werden noch erläutert.

Zwar ist es aus dem Dokument JP-A-62 123 936 bereits bekannt eine Schutzanordnung dadurch zu realisieren, daß ein dreischichtiges Band schraubenartig und selbstüberlappend auf einen Leiterstab gewickelt wird. Das dort verwendete Band besteht jedoch aus einer halbleitenden Schicht, die zwischen zwei Isolierschichten angeordnet ist, so daß die Verwendung dieses Bandes zu einem anderen Aufbau der Schutzanordnung führt.

Für die Wirksamkeit der Trennschicht ist es nicht unbedingt erforderlich, daß diese eine vollständige Bedeckung des Wicklungselementes bildet; es können Spalte freibleiben, durch welche die Kontaktschicht von der Innenseite zur Außenseite der Trennschicht gelangt. Die Trennschicht kann gegebenenfalls selbstüberlappend angeordnet werden und damit eine vollständige Bedeckung des Wicklungselementes bilden; entsprechende Weiterbildungen der Erfindung werden noch erläutert.

Bevorzugtermaßen überdeckt die Kontaktschicht die Trennschicht sowohl an der Innenseite als auch an der Außenseite, so daß die Trennschicht weder an ihrer Innenseite noch an ihrer Außenseite freiliegt. Zur Erzielung des für die Funktion der Trennschicht bedeutsamen Potentialausgleichs ist diese Anordnung besonders vorteilhaft.

Weiterhin bevorzugt ist die Kontaktschicht aus zumindest einem elektrisch zumindest schwach leitfähigen Textilband gebildet.

Ebenfalls bevorzugt ist die Kontaktschicht gebildet aus einer auf der Innenseite der Trennschicht angebrachten inneren Kontaktschicht und einer auf der Außenseite der Trennschicht angebrachten äußeren Kontaktschicht, wobei jeweilige Teilbereiche der inneren Kontaktschicht und der äußeren Kontaktschicht zwischen Teilbereichen der Trennschicht miteinander elektrisch kontaktiert sind. Die Teilbereiche können einander überlappen. Im Rahmen einer solchen Ausgestaltung ist die Kontaktschicht aus zwei Teilen gebildet, wobei diese zwei Teile, nämlich die innere Kontaktschicht und die äußere Kontaktschicht, zwischen einander benachbarten Bereichen der Trennschicht miteinander in Kontakt gebracht sind und somit die Kontaktschicht als Einheit bilden. Diese Ausgestaltung ist vorteilhaft im Hinblick auf ihre Herstellung, denn sie ist herstellbar, indem ein dreischichtiges Band, bestehend aus der inneren Kontaktschicht, der äußeren Kontaktschicht und der zwischen diesen angebrachten Trennschicht, schraubenartig und selbstüberlappend auf die Isolierschicht des Wicklungselementes aufgewickelt wird. Auf diese Weise wird die Schutzanordnung in einem einzigen Arbeitsgang auf das Wicklungselement aufgebracht, wobei es auf geometrische Einzelheiten, insbesondere die Frage, ob und bis zu welchem Grad zwei aufeinanderfolgende Lagen der Trennschicht einander überlappen, allenfalls in untergeordneter Weise ankommt. Demgemäß ist diese Art des Aufbringens der Schutzanordnung relativ schnell, insbesondere unter Zuhilfenahme einer entsprechenden Maschine, durchführbar. Es bedarf nicht mehr der sorgfältigen Kontrolle, die beim Aufbringen der bekannten Schutzanordnungen, wie erwähnt, erforderlich ist. Es versteht sich auch bei der soeben beschriebenen Weiterbildung, daß die innere Kontaktschicht und die äußere Kontaktschicht jeweils ein elektrisch zumindest schwach leitfähiges Textilband sein können. Auch bevorzugt ist es, die Trennschicht zwischen der inneren Kontaktschicht und der äußeren Kontaktschicht zu befestigen und somit, wie bereits angedeutet, ein Band zu erhalten, das zur Herstellung der Schutzanordnung lediglich noch auf das Wicklungselement aufgewickelt werden muß.

Im Rahmen jedweder Ausgestaltung der Erfindung enthält die Trennschicht vorzugsweise Spaltglimmerblätter, die, wie bereits ausgeführt, die gewünschte Neigung zur Spaltbildung aufweisen.

Ebenso bevorzugt ist es, die Isolierschicht, die Trennschicht und die Kontaktschicht des Wicklungselementes so auszuführen, daß sie imprägnierbar sind, insbesondere um eine aushärtbare Harzzubereitung anbringen zu können. Eine bevorzugte Ausgestaltung eines solchen Wicklungselementes zeichnet sich aus durch eine Imprägnierung mit einer ausgehärteten Harzzubereitung, wobei die Kontaktschicht weiterhin elektrisch kontaktierbar ist. Auf diese Weise kann die Kontaktschicht mit einem Wicklungsträger, in den das Wicklungselement eingebaut wird, elektrisch kontaktiert werden, was ebenfalls zu einem wünschenswerten Potentialausgleich zwischen dem Wicklungselement und dem Wicklungsträger beiträgt.

Zur Lösung des auf einen Satz mit mehreren Wicklungselementen gerichteten Teils der Aufgabe wird ein Satz mit mehreren Wicklungselementen angegeben, wobei jedes Wicklungselement dem oben beschriebenen erfindungsgemäßen Wicklungselement entspricht und bei dem die Leiteranordnungen untereinander verschaltet sind und eine Wicklung für eine elektrische Maschine, insbesondere einen Turbogenerator, bilden.

Alle oben erwähnten bevorzugten Weiterbildungen eines einzelnen Wicklungselements sind ebenfalls bevorzugte Weiterbildungen der Wicklungselemente eines Satzes aus mehreren Wicklungselementen.

Vorzugsweise sind alle Isolierschichten, alle Trennschichten und alle Kontaktschichten der Wicklungselemente des Satzes imprägnierbar, und sie werden insbesondere mit einer aushärtbaren Harzzubereitung imprägniert und diese Harzzubereitung ausgehärtet.

Die Wicklungselemente des Satzes sind vorzugsweise in einem elektrisch leitfähigen Wicklungsträger angeordnet, wobei jede Kontaktschicht mit dem Wicklungsträger elektrisch kontaktiert ist. Dieser Wicklungsträger ist insbesondere ein aus einer Vielzahl dünner, ferromagnetischer Bleche gebildeter Körper. Die Bleche bestehen insbesondere aus Weicheisen oder einer im wesentlichen dieselben magnetischen Eigenschaften wie Weicheisen aufweisenden Legierung. Die Kontaktierung der Wicklungselemente mit dem Wicklungsträger führt zu einer Unterdrückung elektrischer Potentialdifferenzen zwischen Wicklungselementen untereinander oder zwischen einem Wicklungselement und dem Wicklungsträger und trägt somit bei zu einer weiteren Verbesserung des Schutzes der Wicklungselemente gegen eine Beschädigung durch eine ungewollt auftretende Glimmentladung oder dergleichen. Weiterhin bewirken die Bleche eine elektrische Überbrückung zwischen benachbarten selbstüberlappenden Bahnen eines Wicklungselementes an der Außenseite. Hierdurch wird gewährleistet, daß ein Außenglimmschutzstrom überwiegend in axialer Richtung und nicht schraubenförmig um die Leiteranordnung herum fließen kann.

Ausführungsbeispiele für die Erfindung sowie weitere Hinweise im Hinblick auf eine bevorzugte Anwendung der Erfindung werden anhand der Zeichnung näher erläutert. Die Zeichnung ist teilweise leicht verzerrt und/oder schematisiert ausgeführt, um bestimmte Merkmale näher herauszustellen. Die Zeichnung ist nicht als maßstabsgerechte Darstellung eines konkreten Ausführungsbeispiels anzusehen. Die anhand der Zeichnung erteilten Hinweise sind gegebenenfalls zu ergänzen in Anwendung der Kenntnisse, die dem einschlägig bewanderten Fachmann zu Gebote stehen, und der Hinweise, die sich auf den zitierten Dokumenten des Standes der Technik ergeben. Im einzelnen zeigen:
- Figur 1: einen Teil eines Querschnitts durch ein Wicklungselement, das in einem Wicklungsträger angeordnet ist;
- Figur 2: eine Außenansicht eines Wicklungselements;
- Figur 3 und Figur 4: schematisierte Ansichten eines Wicklungselements; sowie
- Figur 5: eine schematisierte Darstellung eines Bandes, welches bei der Herstellung eines Wicklungselements vorzugsweise Anwendung findet.

In den Figuren tragen einander entsprechende Elemente jeweils dasselbe Bezugszeichen. Die zu einzelnen Figuren gegebenen Erläuterungen gelten in diesem Sinne für alle Figuren der Zeichnung.

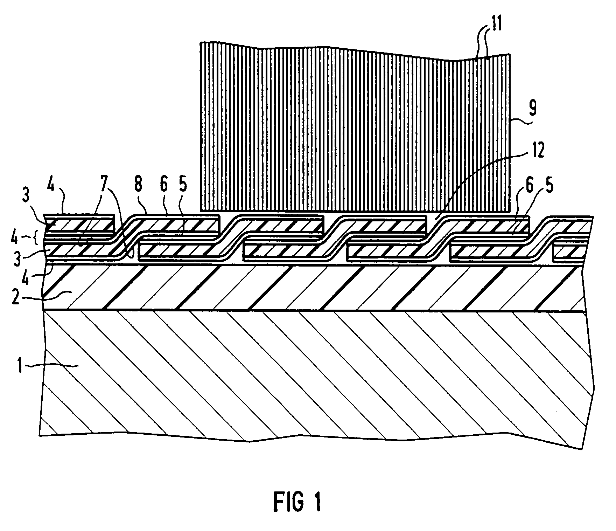

Figur 1 zeigt ein Wicklungselement, welches eine elektrisch leitfähige Leiteranordnung 1 aufweist, die von verschiedenen Schichten umgeben ist. Die Leiteranordnung 1 ist der Einfachheit halber als homogener, metallischer Körper dargestellt. In der Praxis ist eine solche Leiteranordnung 1 allerdings weniger üblich; insbesondere dann, wenn die Leiteranordnung 1 ein Bestandteil einer Ständerwicklung einer elektrischen Maschine wie z.B. eines Turbogenerators ist, ist sie ein mehr oder weniger komplexes Gebilde aus einer Vielzahl von stab- oder bandförmigen elektrischen Leitern, von denen gegebenenfalls alle oder einige hohl sind zur Durchleitung eines flüssigen oder gasförmigen Kühlmittels. Von besonderer Bedeutung in großen elektrischen Maschinen, insbesondere Turbogeneratoren, die ausgelegt sind zur Abgabe oder Aufnahme einer elektrischen Leistung von 10 MW und darüber, sind Leiteranordnungen 1 in Form sogenannter Roebelstäbe. Bei einem Roebelstab handelt es sich um eine Anordnung mit einer Vielzahl einzelner stabförmiger elektrischer Leiter, die nach bestimmten Gesichtspunkten untereinander verflochten sind. Von einer Darstellung wird im vorliegenden Fall aus Gründen der Vereinfachung abgesehen.

Die Leiteranordnung 1 ist umgeben von einer elektrisch isolierenden Isolierschicht 2. Diese Isolierschicht 2 wird üblicherweise gebildet, indem die Leiteranordnung 1 mit einem imprägnierbaren Isolierband umwickelt wird, welches als wichtige funktionelle Komponente eine Glimmerzubereitung enthält. Das auf die Leiteranordnung 1 aufgewickelte Band wird anschließend mit einer aushärtbaren Harzzubereitung, insbesondere einem Gemisch aus einem Epoxidharz und einem Säureanhydrid, getränkt und die Harzzubereitung ausgehärtet. Wie bereits erwähnt, kann diese Tränkung und Aushärtung vor oder nach dem Einbau des Wicklungselements in einen entsprechend vorgesehenen Wicklungsträger erfolgen. Je nach Anwendung kann zwischen der Leiteranordnung 1 und der Isolierschicht 2 eine sogenannte Glimmschutzanordnung vorgesehen werden, die zur Vergleichmäßigung des elektrischen Potentials in der Umgebung der Leiteranordnung 1 dient. Dies ist dann besonders wichtig, wenn die Leiteranordnung 1 einen komplexen inneren Aufbau hat, insbesondere ein Roebelstab ist. Von der Darstellung einer Glimmschutzanordnung ist aus Gründen der Vereinfachung ebenfalls abgesehen worden.

Die Isolierschicht 2 des Wicklungselements ist umgeben von einer Schutzanordnung 3, 4, bestehen aus einer schraubenartig und selbstüberlappend angeordneten Trennschicht 3 sowie einer Kontaktschicht 4, die ebenfalls schraubenartig und selbstüberlappend angeordnet ist sowie die Trennschicht 3 von einer der Isolierschicht 2 zugewandten Innenseite 5 zu einer der Isolierschicht 2 abgewandten Außenseite 6 durchquert. Die Trennschicht 3 ist ausgezeichnet durch eine relativ geringe mechanische Festigkeit, so daß eine Spaltbildung, die einsetzt, wenn das Wicklungselement mechanischen Dehnungen oder Schrumpfungen unterworfen wird, in der Trennschicht 3 konzentriert wird. Die Kontaktschicht 4 ist elektrisch zumindest schwach leitfähig und hüllt die Trennschicht 3 gewissermaßen ein, so daß die Trennschicht 3 elektrostatisch abgeschirmt ist. Dadurch kann es nicht zu einer Glimmentladung in einem in der Trennschicht 3 aufgetretenen Spalt kommen. Die elektrische Leitfähigkeit der Kontaktschicht 4 wird vorzugsweise der zu erwartenden Belastung des Wicklungselementes durch magnetische Wechselfelder angepaßt. Ein die Kontaktschicht 4 durchdringendes magnetisches Wechselfeld führt nämlich dazu, daß in der Kontaktschicht 4 ein elektrischer Strom induziert wird. Ist die Leitfähigkeit der Kontaktschicht 4 relativ hoch, so muß erwartet werden, daß dieser elektrische Strom relativ hoch wird. Da der elektrische Strom ebenfalls ein Magnetfeld erzeugt, kommt es somit in der Summe zu einer Beeinflussung des von außen auf die Kontaktschicht 4 einwirkenden Magnetfeldes, was unter Umständen unerwünscht sein kann. Außerdem bewirkt der elektrische Strom unter Umständen eine Erwärmung der Kontaktschicht 4, die im ungünstigsten Fall zu einer Funkenerosion oder einer thermischen Beschädigung des Wicklungselementes führen könnte. Um Nachteile, die sich aus diesen beiden Effekten ergeben können, zu vermeiden, ist daher die elektrische Leitfähigkeit der Kontaktschicht 4 entsprechend zu wählen. Unter Umständen reicht eine vergleichsweise schwache Leitfähigkeit, wie man sie gemäß üblichem Verständnis von einem Halbleiter erwarten würde, zur Gewährleistung des gewünschten Potentialausgleichs durch die Kontaktschicht 4 aus. Aus Figur 1 ist auch erkennbar, daß die Kontaktschicht 4 ihrerseits zweiteilig aufgebaut ist. Um dies herauszustellen, sind die einzelnen Elemente des Wicklungselements nicht in unmittelbarem Kontakt, sondern leicht beabstandet zueinander dargestellt. In der Realität sind einander benachbarte Elemente selbstverständlich in engem Kontakt zueinander.

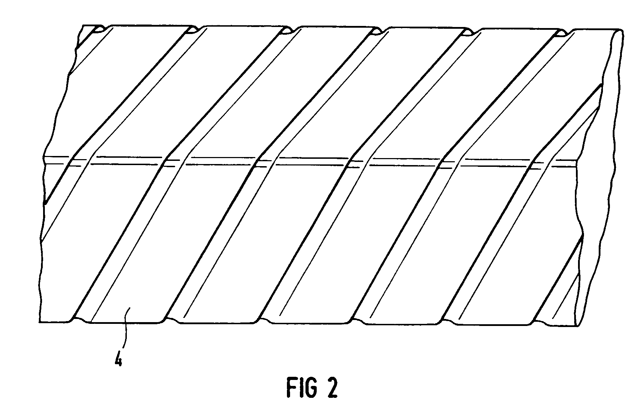

Wie in Figur 1 dargestellt, und wie auch aus Figur 2 ersichtlich, ist die Kontaktschicht 4 zusammengesetzt aus einer auf der Innenseite 5 der Trennschicht 3 angeordneten inneren Kontaktschicht 7 und einer auf der Außenseite 6 der Trennschicht 3 angeordneten äußeren Kontaktschicht 8. Zwischen einander überlappenden Teilbereichen der Trennschicht 3 liegen die innere Kontaktschicht 7 und die äußere Kontaktschicht 8 aufeinander, kommen somit in elektrischen Kontakt zueinander und bilden demgemäß die einheitliche Kontaktschicht 4.

Das Wicklungselement ist angeordnet in einem Wicklungsträger 9, der aus einer Vielzahl aufeinanderliegender weichmagnetischer Bleche 11 besteht. Insbesondere ist das Wicklungselenent angeordnet in einer in dem Wicklungsträger 9 befindlichen Nut, und zwar zusammen mit wenigstens einem weiteren, gleichartigen Wicklungselement. Auch dies ist der Einfachheit halber nicht dargestellt; für Ausführungsbeispiele sei auf die zitierten Dokumente des Standes der Technik verwiesen. Die Bleche 11 sind in Umfangsrichtung mit der Außenseite 6 benachbarter, sich überlappender Lagen des Wicklungselementes in elektrischem Kontakt, so daß in Umfangsrichtung eine elektrische Überbrückung eines an der Außenseite 6 vorliegenden Spaltes 12 zwischen den Bahnen gewährleistet ist. Hierdurch fließt ein Außenglimmschutzstrom in axialer Richtung, d.h. parallel zur Leiteranordnung 1. Ohne diese Überbrückung müßte der Außenglimmschutzstrom dem spiralförmig gewickelten Wicklungselement folgend schraubenförmig um die Leiteranordnung 1 fließen.

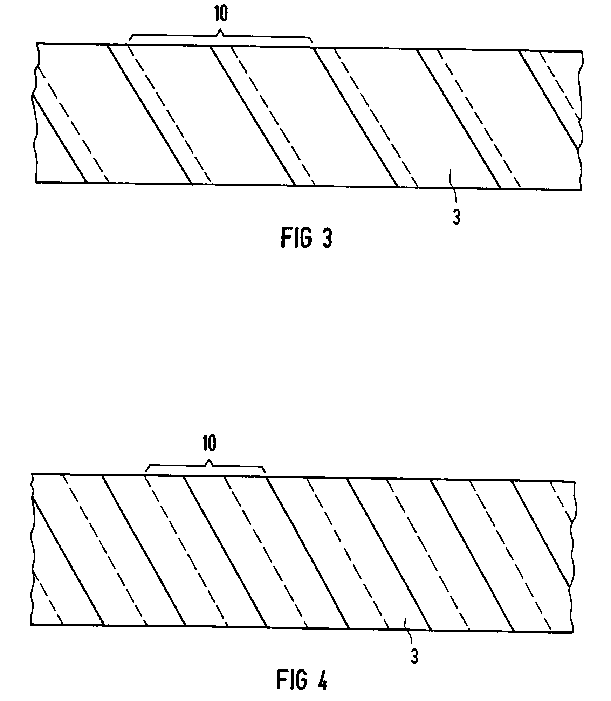

Die Figuren 3 und 4 zeigen schematisierte Ansichten von Wicklungselementen und sollen insbesondere klarstellen, daß die aus den Figuren 1 und 2 erkennbare dichte Bewicklung des Wicklungselementes mit der Trennschicht 3 nicht erforderlich ist. Nach den Figuren 1 und 2 ist die Anordnung der Trennschicht 3 um die Isolierschicht 2 nämlich im wesentlichen zweischichtig, bis auf diejenigen Stellen, wo die Trennschicht 3 von einer Lage unmittelbar an der Isolierschicht 2 zu einer weiter außerhalb gelegenen Lage wechselt. Eine solche dichte Bewicklung hat selbstverständlich einen besonders guten Kontakt zwischen der inneren Kontaktschicht 7 und der äußeren Kontaktschicht 8 zur Folge, ist aber nicht unbedingt erforderlich. Figur 3 wiederholt im wesentlichen die Art der Bewicklung, die in den Figuren 1 und 2 dargestellt ist. Eine durchgehende schräge Linie stellt einen auf der Außenseite des Wicklungselementes erkennbaren Rand der Trennschicht 3 dar; eine gestrichelt gezeichnete Linie stellt den Rand der Trennschicht 3 dar, der unter einer anderen Lage der Trennschicht 3 verborgen ist. Eine Klammer 10 zeigt, von welcher durchgezogenen Linie bis zu welcher gestrichelten Linie das die Trennschicht 3 bildende Band reicht.

Figur 4 zeigt mit denselben Bezugszeichen und Bedeutungen wie Figur 3 eine Art der Bewicklung des Wicklungselementes, bei der die Trennschicht 3 zu zwei Dritteln außerhalb des Wicklungselements und nur zu einem Drittel unterhalb einer anderen Lage der Trennschicht 3 verläuft. Gemäß Figur 4 ist das Wicklungselement daher lockerer als gemäß Figuren 1 bis 3 bewickelt, was eine gewisse Materialersparnis bedeutet und unter Umständen auch eine geringere Sorgfalt bei der Herstellung erfordert.

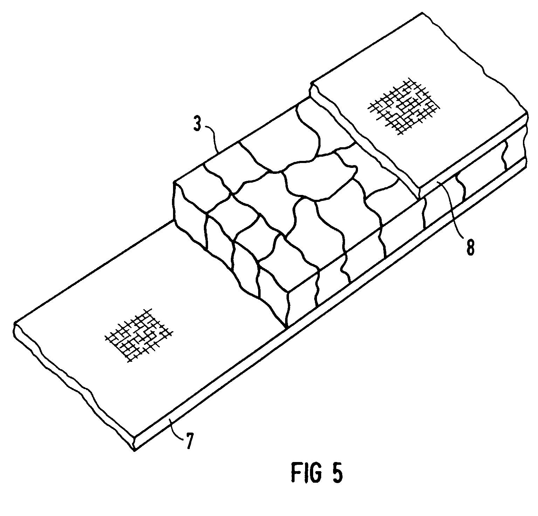

Figur 5 zeigt schließlich das Band aus innerer Kontaktschicht 7, Trennschicht 3 und äußerer Kontaktschicht 8, das zur Herstellung der aus den Figuren 1 bis 4 erkennbaren Wicklungselemente zu verwenden wäre. Die innere Kontaktschicht 7 und die äußere Kontaktschicht 8 bestehen jeweils aus einem elektrisch leitfähigen Textilband. Wie ein solches Textilband genauer beschaffen sein kann, ist bereits erläutert worden. Die Trennschicht 3 besteht im wesentlichen aus Spaltglimmerblättern, die, wie einschlägig bekannt, relativ geringe mechanische Festigkeit besitzen und relativ leicht zur Aufspaltung neigen. Diese Spaltglimmerblätter sind zwischen der inneren Kontaktschicht 7 und der äußeren Kontaktschicht 8 befestigt, insbesondere verklebt. Dieses Band ist in Anwendung einschlägiger Erkenntnisse herstellbar und als Ganzes lagerbar, und seine Verarbeitung zur Herstellung des beschriebenen Wicklungselements ist unkompliziert und mit einschlägig bekannten und verfügbaren Methoden und Maschinen verarbeitbar.

Das beschriebene Wicklungselement eignet sich besonders dann, wenn die üblicherweise vorgenommene Imprägnierung oder Tränkung mit einer aushärtbaren Harzzubereitung erst nach dem Einbau des Wicklungselementes in einen Wicklungsträger und nach dem Verschalten des Wicklungselements mit anderen, gleichartigen Wicklungselementen vorgenommen werden soll. Bei einer solchen Tränkung und anschließenden Aushärtung der Harzzubereitung bildet sich aus den Wicklungselementen und dem Wicklungsträger gewissermaßen ein einziger Monolith, der allerdings während seiner Herstellung und auch im Rahmen seines bestimmungsgemäßen Betriebs gewissen mechanischen Dehnungen und Schrumpfungen ausgesetzt ist, die es erfordern, gewisse Freiheitsgrade zum Ausgleich dieser Dehnungen und Schrumpfungen vorzusehen. Diese Freiheitsgrade müssen so beschaffen sein, daß ihre Ausnutzung keinerlei Gefahr des Auftretens von Glimmentladungen und dergleichen mit sich bringt. Hierzu ist das kostengünstig und unkompliziert herstellbare erfindungsgemäße Wicklungselement besonders geeignet.

Ein Wicklungselement eignet sich besonders für elektrische Maschinen, wie Turbogeneratoren ab einer elektrischen Leistung von 10 MW bei einer Nennspannung von über 6 KV oder Hochspannungsmotoren ab 2 MW elektrischer Leistung bei einer Nennspannung von ca. 10 KV und darüber.

## Patentansprüche

1. Wicklungselement für eine elektrische Maschine, mit einer elektrisch leitfähigen Leiteranordnung (1) zur Leitung eines elektrischen Stromes und einer Isolierschicht (2), welche die Leiteranordnung (1) umgibt, sowie einer die Isolierschicht (2) umgebenden Schutzanordnung (3, 4), welche Schutzanordnung (3, 4) eine schraubenartig angeordnete Trennschicht (3) aufweist, dadurch gekennzeichnet, daß die Schutzanordnung (3, 4) eine schraubenartig und selbstüberlappend angeordnete sowie die Trennschicht (3) von einer der Isolierschicht (2) zugewandten Innenseite (5) zu einer der Isolierschicht (2) abgewandten Außenseite (6) durchquerende, elektrisch zumindest schwach leitfähige Kontaktschicht (4) aufweist.

2. Wicklungselement nach Anspruch 1, bei dem die Kontaktschicht (4) die Trennschicht (3) sowohl an der Innenseite (5) als auch an der Außenseite (6) überdeckt.

3. Wicklungselement nach Anspruch 1 oder 2, bei dem die Kontaktschicht (4) aus zumindest einem elektrisch zumindest schwach leitfähigen Textilband (7, 8) gebildet ist.

4. Wicklungselement nach Anspruch 1 oder 2, bei dem die Kontaktschicht (4) gebildet ist aus einer auf der Innenseite (5) angebrachten inneren Kontaktschicht (7) sowie einer auf der Außenseite (6) angebrachten äußeren Kontaktschicht (8), wobei jeweilige Teilbereiche der inneren Kontaktschicht (7) und der äußeren Kontaktschicht (8) zwischen einander überlappenden Teilbereichen der Trennschicht (3) miteinander elektrisch kontaktiert sind.

5. Wicklungselement nach Anspruch 4, bei der die innere Kontaktschicht (7) und die äußere Kontaktschicht (8) elektrisch zumindest schwach leitfähige Textilbänder sind.

6. Wicklungselement nach Anspruch 4 oder 5, bei der die Trennschicht (3) zwischen der inneren Kontaktschicht (7) und der äußeren Kontaktschicht (8) befestigt ist.

7. Wicklungselement nach einem der vorhergehenden Ansprüche, bei der die Trennschicht (3) Spaltglimmerblätter enthält.

8. Wicklungselement nach einem der vorhergehenden Ansprüche, bei dem die Isolierschicht (2) die Trennschicht (3) und die Kontaktschicht (4) imprägnierbar sind.

9. Wicklungselement nach Anspruch 8, bei dem die Isolierschicht (2), die Trennschicht (3) und die Kontaktschicht (4) mit einer ausgehärteten Harzzubereitung imprägniert sind und bei dem die Kontaktschicht (4) elektrisch kontaktierbar ist.

10. Wicklungselement nach einem der vorhergehenden Ansprüche, welches von einem elektrisch leitfähigen Wicklungsträger (9) in Umfangsrichtung umgeben und elektrisch kontaktiert ist.

11. Satz mit mehreren Wicklungselementen nach einem der vorhergehenden Ansprüche, bei dem die Leiteranordnungen (1) untereinander verschaltet sind und eine Wicklung für eine elektrische Maschine, insbesondere einen Turbogenerator, bilden.

12. Satz nach Anspruch 11, bei dem alle Isolierschichten (2), alle Trennschichten (3) und alle Kontaktschichten (4) imprägnierbar sind.

13. Satz nach Anspruch 12, bei dem alle Isolierschichten (2), alle Trennschichten (3) und alle Kontaktschichten (4) mit einer ausgehärteten Harzzubereitung imprägniert sind.

14. Satz nach einem der Ansprüche 11 bis 13, dessen Wicklungselemente in einem elektrisch leitfähigen Wicklungsträger (9) angeordnet sind, wobei jede Kontaktschicht (4) mit dem Wicklungsträger (9) elektrisch kontaktiert ist.

## Claims

1. Winding element for an electrical machine, having an electrically conductive conductor arrangement (1) for carrying an electric current, and having an insulating layer (2) which surrounds the conductor arrangement (1), as well as having a protective arrangement (3, 4) which surrounds the insulating layer (2) and which protective arrangement (3, 4) has an isolating layer (3) which is arranged like a helix, characterized in that the protective arrangement (3, 4) has a contact layer (4) which is electrically at least slightly conductive, is arranged like a helix and overlapping itself, and passes through the isolating layer (3) from an inner side (5) which faces the insulating layer (2) to an outer side (6) which faces away from the insulating layer (2).

2. Winding element according to Claim 1, in which the contact layer (4) covers the isolating layer (3) both on the inside (5) and on the outside (6).

3. Winding element according to Claim 1 or 2, in which the contact layer (4) is formed from at least one textile strip (7, 8) which is electrically at least slightly conductive.

4. Winding element according to Claim 1 or 2, in which the contact layer (4) is formed from an inner contact layer (7), which is fitted on the inside (5), and from an outer contact layer (8), which is fitted on the outside (6), respective subareas of the inner contact layer (7) and of the outer contact layer (8) making electrical contact with one another between mutually overlapping subareas of the isolating layer (3).

5. Winding element according to Claim 4, in which the inner contact layer (7) and the outer contact layer (8) are textile strips which are electrically at least slightly conductive.

6. Winding element according to Claim 4 or 5, in which the isolating layer (3) is mounted between the inner contact layer (7) and the outer contact layer (8).

7. Winding element according to one of the preceding claims, in which the isolating layer (3) contains flakes of mica splittings.

8. Winding element according to one of the preceding claims, in which the insulating layer (2), the isolating layer (3) and the contact layer (4) can be impregnated.

9. Winding element according to Claim 8, in which the insulating layer (2), the isolating layer (3) and the contact layer (4) are impregnated with a cured resin preparation, and in which the contact layer (4) can be made contact with electrically.

10. Winding element according to one of the preceding claims, which is surrounded in the circumferential direction, and is made contact with electrically, by an electrically conductive winding support (9).

11. Set having a plurality of winding elements according to one of the preceding claims, in which the conductor arrangements (1) are connected to one another and form a winding for an electrical machine, in particular a turbogenerator.

12. Set according to Claim 11, in which all the insulating layers (2), all the isolating layers (3) and all the contact layers (4) can be impregnated.

13. Set according to Claim 12, in which all the insulating layers (2), all the isolating layers (3) and all the contact layers (4) can be impregnated with a cured resin preparation.

14. Set according to one of Claims 11 to 13, whose winding elements are arranged in an electrically conductive winding support (9), the winding support (9) making electrical contact with each contact layer (4).

## Revendications

1. Elément de bobinage pour une machine électrique, comportant un agencement (1) électriquement conducteur pour conduire un courant électrique, et une couche (2) isolante qui entoure l'agencement (1) conducteur, ainsi qu'un agencement (3, 4) protecteur, qui entoure la couche (2) isolante et comporte une couche (3) séparatrice disposée en hélice, caractérisé en ce que l'agencement (3, 4) protecteur comporte une couche (4) de contact, électriquement au moins faiblement conductrice, qui est disposée en hélice et en propre chevauchement et qui traverse la couche (3) séparatrice depuis un côté (5) intérieur, tourné vers la couche (2) isolante, vers un côté (6) extérieur, opposé à la couche (2) isolante.

2. Elément de bobinage suivant la revendication 1, dans lequel la couche (4) de contact recouvre la couche (3) séparatrice tant sur le côté (5) intérieur que sur le côté (6) extérieur.

3. Elément de bobinage suivant la revendication 1 ou 2, dans lequel la couche (4) de contact est constituée d'un ruban (7, 8) textile électriquement au moins faiblement conducteur.

4. Elément de bobinage suivant la revendication 1 ou 2, dans lequel la couche (4) de contact est formée d'une couche (7) de contact intérieure, appliquée sur le côté (5) intérieur, et d'une couche (8) de contact extérieure, appliquée sur le côté (6) extérieur, des régions partielles respectives de la couche (7) de contact intérieure et de la couche (8) de contact extérieure étant mises en contact électrique mutuel entre des régions partielles en chevauchement mutuel de la couche (3) séparatrice.

5. Elément de bobinage suivant la revendication 4, dans lequel la couche (7) de contact intérieure et la couche (8) de contact extérieure sont des rubans textiles électriquement au moins faiblement conducteurs.

6. Elément de bobinage suivant la revendication 4 ou 5, dans lequel la couche (3) séparatrice est fixée entre la couche (7) de contact intérieure et la couche (8) de contact extérieure.

7. Elément de bobinage suivant l'une des revendications précédentes, dans lequel la couche (3) séparatrice contient des feuilles de mica clivé.

8. Elément de bobinage suivant l'une des revendications précédentes, dans lequel la couche (2) isolante, la couche (3) séparatrice et la couche (4) de contact peuvent être imprégnées.

9. Elément de bobinage suivant la revendication 8, dans lequel la couche (2) isolante, la couche (3) séparatrice et la couche (4) de contact sont imprégnées d'une préparation de résine durcie, et dans lequel la couche (4) de contact peut être mise en contact électrique.

10. Elément de bobinage suivant l'une des revendications précédentes, qui est entouré en direction circonférentielle et mis en contact électrique par un support (9) de bobinage électriquement conducteur.

11. Jeu comportant plusieurs éléments de bobinage suivant l'une des revendications précédentes, dans lequel les agencements (1) conducteurs sont mutuellement reliés et forment un bobinage pour une machine électrique, notamment un turboalternateur.

12. Jeu suivant la revendication 11, dans lequel toutes les couches (2) isolantes, toutes les couches (3) séparatrices et toutes les couches (4) de contact peuvent être imprégnées.

13. Jeu suivant la revendication 12, dans lequel toutes les couches (2) isolantes, toutes les couches (3) séparatrices et toutes les couches (4) de contact sont imprégnées d'une préparation de résine durcie.

14. Jeu suivant l'une des revendications 11 à 13, dont les éléments de bobinage sont disposés dans un support (9) de bobinage électriquement conducteur, chaque couche (4) de contact étant mise en contact électrique avec le support (9) de bobinage.
